# EUROPEAN PATENT APPLICATION

(11) **EP 4 360 909 A1**
(43) Date of publication of application: **01.05.2024**
(21) Application number: 22828016.0
(22) Date of filing: 28.03.2022
(51) Int. Cl.: B60C 9/18, B60C 5/00, B60C 9/22, B60C 11/03

(54) **TIRE**

(30) Priority: 21.06.2021 JP 2021102399
(71) Applicant: BRIDGESTONE CORPORATION, Chuo-ku Tokyo 104-8340 (JP)
(72) Inventor: MATSUNAGA Ietomo, Tokyo 104-8340 (JP); KUWAYAMA Isao, Tokyo 104-8340 (JP)
(74) Representative: Marks & Clerk LLP
(86) International application number: PCT/JP2022/015078
(87) International publication number: WO 2022/270097

(57) **Abstract**

A pneumatic tire (10) comprises a tread (40) in contact with a road surface and a pair of inclined belts (61, 63) with crossing cords. A volume of the groove portion formed on the tread (40) of outside when mounted to the vehicle based on a tire equatorial line (CL) being less than volume of the groove portion formed on the tread (40) of inside when mounted to the vehicle based on the tire equatorial line (CL), and the pneumatic tire (10) is provided with a reinforcing belt (70) covering a plurality of covering cords extending in the tire width direction and along tire radial direction and arranged at a predetermined distance between the inclined belts (61,63) and the tread (40). The reinforcing belt (70) extends from the outside when mounted to the vehicle to the inside when mounted to the vehicle.

## Description

### [Technical Field]

The present disclosure relates to a tire having an asymmetrical pattern of tread based on tire equatorial line.

### [Background Art]

Conventionally, an asymmetrical pattern based on tire equatorial line has been widely adopted for a pneumatic tire (hereinafter omitted as a tire when appropriate) mounted on a vehicle such as a four-wheel vehicle, for example, for the purpose of vehicle dynamics and noise control (Patent Literature 1).

In a tire having a tread of such an asymmetrical pattern, the volume of the groove formed on outside (OUT) when mounted to the vehicle with respect to tire equatorial line (so-called negative ratio) differs from the volume of the groove formed on inside (IN) when mounted to the vehicle.

### [Citation List]

### [Patent Literature]

[Patent Literature 1]
Japanese Patent Laid-Open No. 2014-159244

### [Summary of Invention]

When the negative ratio of outside (OUT) when mounted to the vehicle is low, especially when the tread rigidity is high due to a pattern or a type of rubber, if a large lateral input is applied to the tire by turning at a high speed or a large steering angle, the grounding pressure of the tread of outside (OUT) when mounted to the vehicle is released at the wheel position of the turning radius outside, and lateral force (Fy) tends to be lowered. As a result, the cornering force (CF) cannot be sufficiently increased, and cornering performance may be aggravated.

Therefore, the following disclosure has been made in view of such a situation, and it is an object to provide a tire which can effectively suppress grounding pressure relief during a large input turn even an asymmetric pattern with a low negative ratio of outside (OUT) when mounted to the vehicle is adopted.

One aspect of the present disclosure is a tire (pneumatic tire 10) including a tread (tread 40) in contact with a road surface (road surface GND) and a pair of crossing belt (inclined belts 61, 63), of which cords are crossed. A volume of grooves formed on the tread of outside when mounted to a vehicle based on a tire equatorial line is less than volume of grooves formed in the tread of inside when mounted to the vehicle based on the tire equatorial line, and the tire include a reinforcing belt (reinforcing belt 70) covering a plurality of reinforcing cords extending in the tire width direction and along tire radial direction and arranged at a predetermined distance between the crossing belt and the tread. The reinforcing belt is provided from the outside when mounted to the vehicle to the inside when mounted to the vehicle.

### [Brief Description of Drawings]

[FIG. 1] FIG. 1 is a cross-sectional view of a pneumatic tire 10 along a tire width direction and a tire radial direction.
[FIG. 2] FIG. 2 is a partial plan view of a tread of the pneumatic tire 10.
[FIG. 3] FIG. 3 is a partially exploded plan view of the inside of a tread 40 of the pneumatic tire 10.
[FIG. 4] FIG. 4 is a schematic view showing the cross-sectional shape of the pneumatic tire 10 during turning.

### [Modes for Carrying out the Invention]

Hereinafter, the embodiment will be described based on the drawings. The same functions and structures are denoted by the same or similar reference numerals, and the description thereof will be omitted accordingly.

### (1)Overall schematic structure of tire

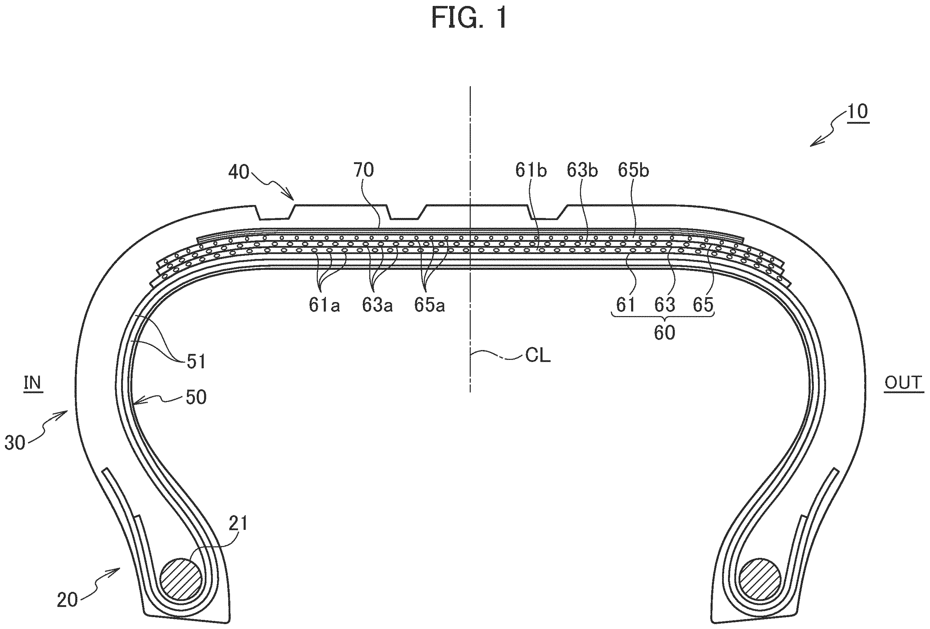

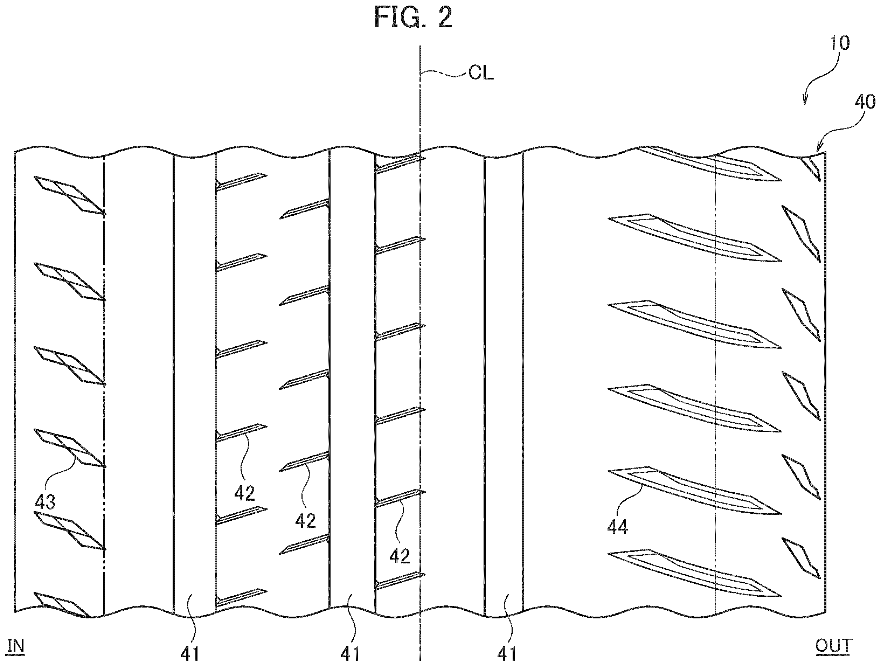

FIG. 1 is a cross-sectional view of a pneumatic tire 10 according to the present embodiment. Specifically, FIG. 1 is a cross-sectional view of the pneumatic tire 10 along a tire width direction and a tire radial direction. In FIG. 1, the cross-sectional hatching is partially omitted (hereinafter the same). FIG. 2 is a partial plan view of a tread of the pneumatic tire 10.

In this embodiment, the pneumatic tire 10 is mainly used for a four-wheel vehicle such as a standard passenger car. The four-wheeled vehicle may include a sports car suitable for sport driving, and may be used in a motor sport car driven on a circuit (race course and racetrack, etc.).

The pneumatic tire 10 includes a bead portion 20, a sidewall 30 and a tread 40. The pneumatic tire 10 includes a carcass 50 and a belt layer 60 in tire radial direction inside of the tread 40. Further, the pneumatic tire 10 includes a reinforcing belt 70 between the tread 40 (tread rubber) and the belt layer 60.

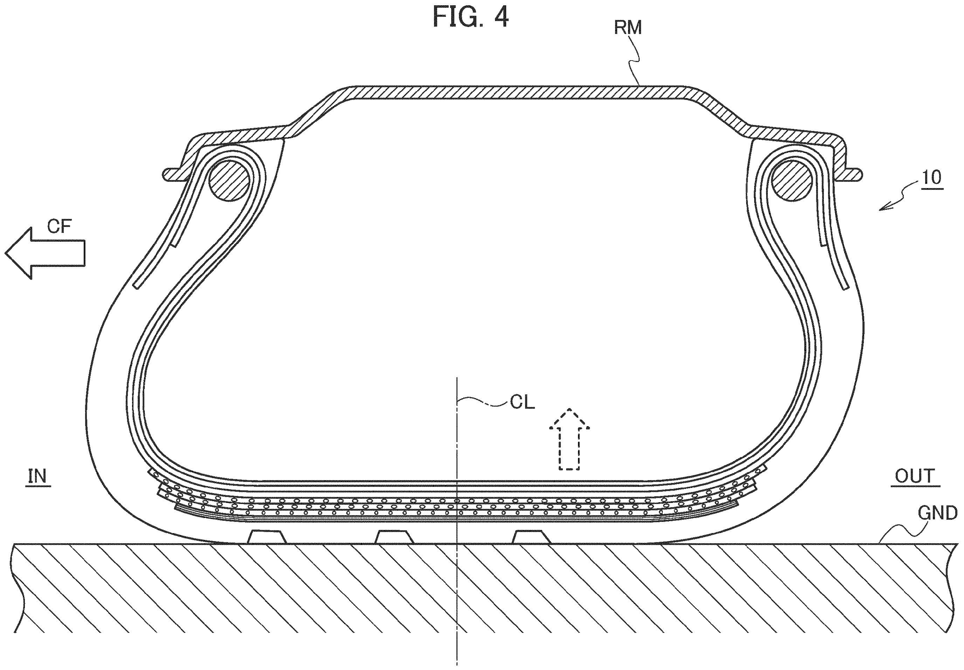

The bead portion 20 is locked by a rim wheel RM (Not shown in FIGs. 1, 2, see FIG. 4) and is annular along a tire circumferential direction. The bead portion 20 has a bead core 21 which is a bundle of metal (such as steel) or organic fiber cords. The tire radial direction outside of the bead core 21 may be provided with a bead filler (Not shown, may be called stiffener) formed of rubber (or non-rubber (For example, resin) having higher rigidity than the peripheral rubber.

The sidewall portion 30 is continued to the bead portion 20 and is located in tire radial direction inside of the bead portion 20. The sidewall portion 30 is a region from the outside end in the tire width direction of the bead portion 20 to the upper end of the belt layer 60. The sidewall portion 30 is sometimes called a sidewall or the like.

The tread 40 is a portion in contact with the road surface GND (Not shown in FIGs. 1, 2, see FIG. 4). A pattern (tread pattern) is formed on the tread 40 of the pneumatic tire 10 in consideration of various performances required for the pneumatic tire 10, specifically, high-speed durability, vehicle dynamics (cornering performance, steering stability, braking performance, etc.), drainage performance, wear resistance, rolling resistance (RR), and quietness (tire noise).

It is preferred that outside (OUT) and inside (IN) of the pneumatic tire 10 are designated when the pneumatic tire 10 is mounted to the vehicle. The OUT side is located in outside which is visible from the side of the vehicle when mounted to the vehicle, and the IN side is located in inside which is not visible from the side of the vehicle when mounted to the vehicle. In the following description, the outside (OUT) or the inside (IN) will be described as appropriate, but it may be interpreted as when mounted to the vehicle. However, it is not necessarily limited to the case when mounted to the vehicle, and it is possible to simply interpret one shoulder of the sidewall portion 30 (or bead portion 20) as outside (OUT) and the other shoulder of the sidewall portion 30 (or bead portion 20) as inside (IN).

As shown in FIG. 2, a groove portion is formed in the tread 40 by several groove elements. Specifically, a plurality of circumferential grooves 41, width direction sipes 42, and shoulder grooves 43 may be formed on the tread 40, respectively.

The circumferential grooves 41 are straight main grooves extending along the tire circumferential direction. Two circumferential grooves 41 are formed on the IN side and one circumferential groove 41 is formed on the OUT side based on the tire equatorial line CL. As described above, the grooves formed on outside (OUT) when mounted to the vehicle may include at least one circumferential groove 41.

Although the width and depth of the circumferential groove 41 are not particularly limited, for example, the depth may be about 4.5 mm to 7 mm, and the width may be substantially the same as the depth, or may be slightly wider (or narrower) than the depth.

The groove wall portion of the circumferential groove 41 may be inclined with respect to the tire radial direction (which may be the tire equatorial line CL). Specifically, one groove wall portion of the circumferential groove 41 is inclined so as to approach inside when mounting to the vehicle as it heads toward inside of the tire radial direction. The other groove wall portion of the circumferential groove 41 is inclined so as to approach outside when mounting to vehicle as it heads toward inside of the tire radial direction inside. That is, the groove width of the circumferential groove 41 may be narrowed as it heads from the outside of the tire radial direction to the inside of the tire radial direction.

The width direction sipes 42 are straight sipes extending in the tire width direction, and a plurality of them are formed at a fixed distance in the tire circumferential direction.

The sipes are fine grooves that close in ground contacted surface of the tread 40, and the opening width of the sipes in the non-grounding state is preferably, but not particularly limited to, 0.1 mm to 1.5 mm.

One end of the width direction sipe 42 in the tire width direction communicates with the circumferential direction groove 41. The width direction sipe 42 inclines in the tire width direction while along the tire width direction. That is, the width direction sipe 42 is not parallel to the tire width direction but inclined in the tire width direction. The inclination angle of the width direction sipe 42 in the tire width direction is 45 degrees or less, and it is preferable to be 30 degrees or less in consideration of both the rigidity of the tread 40 and the control of passing noise (PBN).

The shoulder grooves 43 are formed in the tread shoulder part on the IN side. In this embodiment, the shoulder groove 43 extends in the tire width direction and has a shape such that it bends at the center part.

The shoulder groove 43 may be formed outside in the tire width direction than the ground end in the tire width direction of the pneumatic tire 10 set at normal internal pressure and loaded with normal load. However, the area of inside shoulder land where the shoulder grooves 43 are formed may be grounded with the road surface GND when cornering or the like.

In Japan, the normal internal pressure is the air pressure corresponding to the maximum load capacity of JATMA (Japan Automobile Tire Manufacturers Association) YearBook, and normal load is the maximum load capacity (maximum load) corresponding to the maximum load capacity of JATMA YearBook. Moreover, ETRTO in Europe, TRA in the United States, and other tire standards in various countries correspond to it.

Lug grooves 44 are formed in the tread shoulder part on the OUT side. The lug groove 44 is inclined with respect to the tire width direction while along the tire width direction. That is, the lug groove 44 is not parallel to the tire width direction but inclined with respect to the tire width direction.

The inclination angle of the lug groove 44 with respect to the tire width direction is not more than 45 degrees in the same manner as the width direction sipe 42, and it is preferable that it is not more than 30 degrees in consideration of both rigidity of outside shoulder land part and PBN suppression.

The peripheral portion of the lug groove 44 may be inclined toward inside of the tire radial direction from the tread surface side of the tread 40 (outside shoulder land portion). Such an inclination may be called a chamfer or the like.

In the pneumatic tire 10, the volume of the groove (Specifically, one circumferential groove 41 and the lug groove 44) formed on the tread 40 of outside when mounted to the vehicle based on tire equatorial line CL is smaller than the volume of the groove (Specifically, two circumferential grooves 41, the width direction sipe 42, and the shoulder groove 43) formed on the tread 40 of inside when mounted to the vehicle based on tire equatorial line CL.

The volume of the groove may be interpreted as the area (or volume) of the portion that does not contact with the road surface GND under normal internal pressure and normal load described above. On the other hand, the portion that contact with the road surface GND under normal internal pressure and normal load may be interpreted as the land portion.

The ratio of the groove portion to the land portion may be defined as the so-called negative ratio. The negative ratio may be expressed simply as the groove portion/(land portion + groove portion), but it may be interpreted precisely as the ratio of the groove portion to the overall area of the tread 40, which is a two-dimensional projection of the entire circumference (or unit length (pitch)) portion of the tread 40.

In order to facilitate the calculation of the negative ratio, only the main groove portion of the tread 40 may be subjected to the groove portion, and other grooves may be excluded. Specifically, in this embodiment, the circumferential groove 41 extending in the tire circumferential direction may be subjected to the groove portion, and the width direction sipe 42, shoulder groove 43, and lug groove 44 extending in the tire width direction may be excluded from the calculation of the negative ratio.

In addition, as described above, the ground end in the tire width direction required for the determination of the land portion may be based on the condition that the pneumatic tire 10 set to the normal internal pressure is loaded with the maximum load capacity (maximum load) corresponding to the maximum load capacity (load index (LI)).

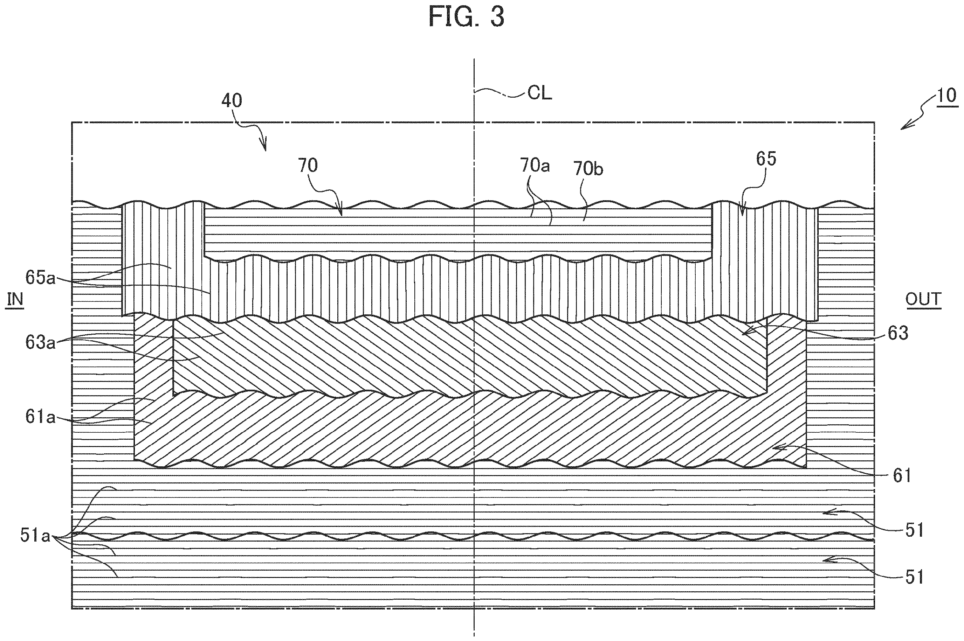

The carcass 50 forms the skeleton of the pneumatic tire 10. The carcass 50 is a radial structure in which a carcass cord 51a (Not shown in FIGs. 1, 2, see FIG. 3) radially arranged along the tire radial direction is covered with a rubber material. The carcass 50 is folded back from inside in the tire width direction to outside in the tire width direction via the bead core 21. One or more carcass 50 may be laminated.

The belt layer 60 is provided outside in tire radial direction of the carcass 50. The belt layer 60 includes an inclined belt 61, an inclined belt 63 and a spiral belt 65.

The inclined belt 61 is provided outside in tire radial direction of the carcass 50. The inclined belt 63 is provided outside in tire radial direction of the inclined belt 61. The inclined belt 61 and the inclined belt 63 each have a belt cord 61a and a belt cord 63a (see FIG. 3) crossing with each other.

In this embodiment, the inclined belt 61 and the inclined belt 63 constitute a pair of crossing belt having crossing cords.

The spiral belt 65 is provided outside of the inclined belt 63, i.e., out side in the tire radial direction of the crossing belt. The spiral belt 65 has a structure in which the belt cord 65a is wound along the tire circumferential direction. Specifically, the spiral belt 65 is constituted by winding a strip-shaped rubber member covered with the belt cord 65a along crossing belt in the tire circumferential direction.

The reinforcing belt 70 is provided between the inclined belt 63 (crossing belt) and the tread 40 (Specifically, the tread rubber forming the tread 40). In this embodiment, the reinforcing belt 70 is provided between the spiral belt 65 and the tread 40. The reinforcing belt 70 has a plurality of reinforcing cords 70a (see FIG. 3) extending along the tire width direction and the tire radial direction.

The reinforcing cords 70a extend along the tire width direction in the tread surface view and extend along the tire radial direction (which may be called the radial direction) in the tire side view. Accordingly, the reinforcing belt 70 may be called a radial belt or the like having cords extending along the radial direction.

The reinforcing belt 70 may be interpreted as a kind of reinforcing belt that is relatively free to extend and deform in the tire circumferential direction and, conversely, difficult to extend and deform in the tire width direction. Thus, the reinforcing belt 70 may function as a component that provides anisotropy within the tread 40 (inside in the tire radial direction).

Further, since the reinforcing belt 70 is provided between the spiral belt 65 and the tread 40 and has the characteristics described above, it may be called a floating belt or the like.

The reinforcing belt 70 extends from the outside (OUT) when mounted to the vehicle to the inside (IN) when mounted to the vehicle. Specifically, the reinforcing belt 70 may be provided on the OUT side and the IN side based on tire equatorial line CL.

Further, the reinforcing belt 70 may be provided at least to the ground end in the tire width direction. As described above, the ground end may be based on the normal internal pressure and the normal load. The end of the reinforcing belt 70 in the tire width direction may be located on the shoulder side of the tread 40 beyond the ground end.

### (2)Structure of the inside of the tread 40

FIG. 3 is a partially exploded plan view of the inside of the tread 40 of the pneumatic tire 10. Specifically, FIG. 3 is a partially exploded plan view of the carcass 50, the belt layer 60, and the reinforcing belt 70 provided inside the tread 40 (tread rubber).

As shown in FIG. 3, in this embodiment, the carcass 50 is composed of two carcass plies 51. As described above, in this embodiment, the carcass 50 is a radial structure, but is not limited to a radial structure, and may be a bias structure in which the carcass cord 51a is arranged so as to cross the tire radial direction.

The material of the carcass cord 51a is not particularly limited, but can be formed, for example, using an organic fiber such as nylon, similar to a tire for a typical four-wheel vehicle. However, the carcass cord 51a may be made of a material such as an aromatic polyamide or steel.

The inclined belt 61 and the inclined belt 63 constituting the belt layer 60 constitute a pair of crossing belt as described above. Specifically, the belt cord 61a and the belt cord 63a are disposed inclined in the tire width direction (which may be the tire circumferential direction), and the belt cord 61a and the belt cord 63a are inclined in the opposite direction to the tire width direction so as to cross each other.

The material of the belt cord 61a and the belt cord 63a is not particularly limited, and may be composed of a material such as, for example, an aromatic polyamide or steel.

The spiral belt 65 is provided between the inclined belts 61 and 63 (crossing belt) and the reinforcing belt 70.

The spiral belt 65 is a belt in which the belt cord 65a extending substantially parallel to the tire equatorial line CL is coated with a rubber material. The belt cord 65a may be referred to as a spiral cord. The belt cord 65a may be formed of, for example, organic fiber or steel. The material of the belt cord 65a and the material of the belt cord 61a, the belt cord 63a may be the same, but in consideration of the performance required for the pneumatic tire 10, they are preferably different. Specifically, the belt cord 65a is preferably stronger than the belt cord 61a and the belt cord 63a.

The number of driving lines (which may be referred to as the placement interval or placement density) of the belt cord 65a in the tire width direction is preferably 6 cords/cm or more.

The reinforcing belt 70 extends in the tire width direction and is constituted by coating a plurality of the reinforcing cords 70a arranged at a predetermined distance with a coating rubber 70b.

The reinforcing cord 70a is preferably arranged so as to be parallel to the tire width direction, that is, the angle formed with the tire width direction is 0 degrees. However, the reinforcing cord 70a may have a slight angle (15 degrees or less) with respect to the tire width direction.

As the material of the reinforcing cord 70a, organic fibers having relatively high strength are preferably used. For example, aramid fibers, specifically Kevlar (registered trademark) and the like can be used. Nylon and the like can also be used depending on the environment in which it is used, but organic fibers (aromatic polyamides) of higher strength are preferably used.

The reinforcing cord 70a may be formed by twisting a plurality of organic fibers and the like described above, but the thickness of the reinforcing cord 70a is preferably 0.5 mm to 2.0 mm, and the Young's modulus of the reinforcing cord 70a is preferably 50 GPa or more.

The number of driving lines of the reinforcing cord 70a is preferably 20-60/50 mm.

### (3)Operational effect

Next, the operational effect of the pneumatic tire 10 according to the present embodiment will be described. As described above, in the pneumatic tire 10, the volume of the groove portion formed on the tread 40 of the outside (OUT) when mounted to the vehicle based on the tire equatorial line CL is smaller than the volume of the groove portion formed on the tread 40 of the inside (IN) when mounted to the vehicle based on the tire equatorial line CL. That is, in the pneumatic tire 10, the negative ratio of the OUT side is lower than that of the IN side.

As described above, for the purpose of vehicle dynamics and noise control, an asymmetric pattern is widely adopted for the pneumatic tire mounted on a vehicle such as a four-wheel vehicle. However, in the case of an asymmetric pattern with a negative ratio on the OUT side < a negative ratio on the IN side, such as the pneumatic tire 10, there are the following disadvantages.

Specifically, when a large lateral input is applied to the tire by turning at a high speed or a large steering angle, the grounding pressure of the tread 40 on the OUT side is released, and lateral force (Fy) tends to be lowered.

FIG. 4 schematically shows the cross-sectional shape of the pneumatic tire 10 during turning. Specifically, FIG. 4 shows the cross-sectional shape of the pneumatic tire 10 mounted to the wheel (front wheel or rear wheel) position of the turning radius outside during turning of a four-wheel vehicle at high speed or at a large steering angle.

As shown in FIG. 4, when the four-wheel vehicle turns (cornering), a cornering force (CF) rises toward the IN side, and the four-wheel vehicle starts turning.

In such a state, a large centrifugal force is applied to the four-wheel vehicle (That is, pneumatic tire 10), and in particular, in the case of the highly rigid tread 40, the grounding pressure on the OUT side with a low negative ratio is easily released. Specifically, in the case of the highly rigid tread 40 of the OUT side with a low negative ratio, the in-plane contraction force acts toward the center in the tire width direction due to the ground contact with the road surface GND, and the tread rubber undergoes deformation called wiping deformation along the tire width direction.

The wiping deformation also causes contraction of the belt layer 60 and the like (including the spiral belt 65), which contributes to the flow of the tread rubber. Therefore, on the OUT side where the negative ratio is low, the escape area of the flowing tread rubber is limited, and the belt layer 60 is likely to be pushed up (may be called buckling), that is, the tread 40 is deformed to inside of the tire radial direction (see the dotted arrow in the figure). As a result, the ground pressure on the OUT side is reduced, and sufficient lateral force (Fy) may not be generated.

In the pneumatic tire 10, the reinforcing belt 70 in which the reinforcing cord 70a arranged along the tire width direction is covered with the coating rubber 70b is provided on inside in the tire radial direction of the tread 40. That is, since the reinforcing belt 70 is provided only with a cord arranged along the tire width direction (and tire radial direction), it is relatively free to extend and deform in the tire circumferential direction, and conversely, it has a characteristic that it is difficult to deform in the tire width direction.

The reinforcing belt 70 functions as a buffer layer between the belt layer 60 (and the spiral belt 65) having high rigidity and the tread 40, and the above-mentioned wiping deformation can be reduced. Specifically, since the wiping deformation, which contributes to the flow of the tread rubber, is absorbed by the reinforcing belt 70, the push up (floating) of the belt layer 60 in the vicinity of the circumferential groove 41 on the OUT side can also be suppressed.

Further, the reinforcing belt 70 can disperse the tension in the tire circumferential direction to the tension in the tire width direction, and the rigidity of the belt layer 60 (and the spiral belt 65) can be reduced reasonably well, thereby suppressing the loss of ground pressure due to the wiping deformation.

As a result of the simulation, the pneumatic tire 10 is expected to improve the cornering power (CP) by about 2% and the cornering force (CFmax) by about 4% compared with the case without the reinforcing belt 70. As a result, lateral force improvement in cornering can be expected.

Thus, the pneumatic tire 10 can effectively suppress the lowering of the ground pressure of the tread 40 of the outside when mounted to the vehicle (OUT) at the outside wheel position of the turning radius when turning at a high speed or at a large steering angle, even if the negative ratio of the outside when mounted to the vehicle (OUT) is low and the rigidity of the tread 40 is high due to a pattern or a type of rubber. Thus, the CF can be sufficiently increased to improve cornering performance.

In this embodiment, the spiral belt 65 having the belt cord 65a wound along the tire circumferential direction is provided between the inclined belts 61 and 63 (crossing belt) and the reinforcing belt 70. Therefore, while functioning as a hoop in the tire circumferential direction, the spiral belt can contribute to the ground pressure relief suppression by the reinforcing belt 70.

Further, the reinforcing belt 70 may be provided at least to the ground end in the tire width direction. Thus, in turning, ground pressure relief of the tread 40 on the OUT side with a low negative ratio can be suppressed more effectively.

In the present embodiment, the groove portion formed on the OUT side may include at least one circumferential groove 41. That is, a straight groove extending in the tire circumferential direction which can be a main groove may be formed on the OUT side where the negative ratio is high. Even in the case of such a tread pattern which extends in the tire circumferential direction with a relatively wide groove width and is unfavorable for deformation suppression, ground pressure relief near the circumferential groove 41 can be effectively suppressed.

In addition, in the present embodiment, one groove wall portion of the circumferential groove 41 is inclined to approach inside when mounted to the vehicle toward inside in the tire radial direction, and the other groove wall portion of the circumferential groove 41 is inclined to approach outside when mounted to the vehicle toward inside in the tire radial direction. Therefore, it acts to suppress the deformation of the tread 40 toward inside in the tire radial direction in the vicinity of the circumferential groove 41 during turning. Therefore, the lowering of the ground pressure of the tread 40 of the outside (OUT) when mounted to the vehicle can be suppressed more effectively.

When the wet performance (drainage performance) is emphasized, the groove wall portion of the circumferential groove 41 may be parallel to the tire radial direction without being inclined.

In the present embodiment, the peripheral edge portion of the lug groove 44 may be formed with a chamfer portion inclined from the tread surface of the tread 40 (outside shoulder land portion) toward inside in the tire radial direction. The formation of such a chamfer is effective for improving wet performance and suppressing uneven wear near the lug groove 44.

### (4)Other Embodiments

Although the embodiments have been described above, they are not limited to the description of the embodiments, and it is obvious to those skilled in the art that various modifications and improvements can be made.

For example, in the embodiments described above, the spiral belt 65 was provided, but the spiral belt 65 is not required. That is, depending on the use of the pneumatic tire 10, the reinforcing belt 70 may be provided outside in the tire radial direction of the crossing belt (inclined belts 61, 63), and the tread 40 (tread rubber) may be provided outside in the tire radial direction of the reinforcing belt 70.

In addition to the spiral belt 65, another reinforcing belt may be provided, for example, a belt (may be called a cap layer, etc.) that covers the tire width direction end of the crossing belt.

In this embodiment, the reinforcing belt 70 is provided to the vicinity of the ground end of outside (OUT) when mounted to the vehicle and inside (IN) when mounted to the vehicle, but the width of the reinforcing belt 70 may be slightly narrower if it is provided on the OUT side and the IN side based on the tire equatorial line CL. Furthermore, the width of the reinforcing belt 70 may be asymmetric based on the tire equatorial line CL. That is, the outside end in the tire radial direction on either the OUT side or the IN side may be located more outside in the tire width direction than another outside end in the tire radial direction .

In the present embodiment, a plurality of straight circumferential grooves 41 are formed on the tread 40, but the circumferential grooves 41 are not necessarily straight and may meander or bend slightly along the tire circumferential direction. Alternatively, the tread 40 may not necessarily have circumferential grooves but may have inclined grooves or the like that are inclined in the tire circumferential direction (or the tire width direction). That is, the tread pattern is not necessarily limited as long as the asymmetrical pattern satisfying an OUT side negative ratio < an IN side negative ratio.

Although the present disclosure has been described in detail above, it is clear to those skilled in the art that the present disclosure is not limited to the embodiments described herein. The present disclosure may be implemented in a modified and modified manner without departing from the object and scope of the present disclosure as determined by the description of the scope of claims. Accordingly, the description of the present disclosure is for illustrative purposes and does not have any restrictive meaning to the present disclosure.

### [Explanation of Reference Numerals]

10 pneumatic tire
20 bead portion
21 bead core
30 sidewall portion
40 tread
41 circumferential groove
42 width direction sipe
43 shoulder groove
44 lug groove
50 carcass
51 carcass ply
51a carcass cord
60 belt layer
61 inclined belt
61a belt cord
63 inclined belt
63a belt cord
65 spiral belt
65a belt cord
70 reinforcing belt
70a reinforcing cord
70b coating rubber

## Claims

1. A tire comprising a tread in contact with a road surface and a pair of crossing belt, of which cords are crossed, wherein
volume of grooves formed on the tread of outside when mounted to a vehicle based on a tire equatorial line is less than volume of grooves formed in the tread of inside when mounted to the vehicle based on the tire equatorial line, and
the tire comprises a reinforcing belt covering a plurality of reinforcing cords extending in the tire width direction and along tire radial direction and arranged at a predetermined distance between the crossing belt and the tread, wherein
the reinforcing belt is provided from the outside when mounted to the vehicle to the inside when mounted to the vehicle.

2. The tire according to claim 1, wherein a spiral belt with cords
wound in the tire circumferential direction is provided between the crossing belt and the reinforcing belt.

3. The tire according to claim 1 or 2, wherein the reinforcing belt is provided at least up to a ground end in the tire width direction.

4. The tire according to any one of claims 1 to 3, wherein the groove portion formed in the outside when mounted to the vehicle includes at least one circumferential groove.
